# EUROPÄISCHE PATENTSCHRIFT

(11) **EP 0 420 149 B1**
(45) Veröffentlichungstag und Bekanntmachung des Hinweises auf die Patenterteilung: **18.11.1993**
(21) Anmeldenummer: 90118394.7
(22) Anmeldetag: 25.09.1990
(51) Int. Cl.: F16H 1/40, F16C 25/06

(54) **Verbund von Anlaufscheiben für Differentialgetriebe**
Unit of axial bearing-disks for differential gear
Groupe de paliers axiaux pour un différentiel

(30) Priorität: 26.09.1989 DE 8911460 U
(43) Veröffentlichungstag der Anmeldung: 03.04.1991
(73) Patentinhaber: Fritz Himmermann GmbH & Co. KG, D-53940 Hellenthal (DE)
(72) Erfinder: Rosenthal, Dieter, D-5372 Schleiden-Oberhausen (DE); Fitz, Karl-Heinz, D-5372 Schleiden-Oberhausen (DE)
(74) Vertreter: Freischem, Werner, Dipl.-Ing.

(56) Entgegenhaltungen:
- DE-A- 2 454 067
- DE-A- 3 642 463
- DE-B- 2 453 964
- US-A- 2 886 382

## Beschreibung

Die Erfindung bezieht sich auf einen Verbund von Anlaufscheiben, die zwischen dem Ausgleichsgehäuse und den Kegelrädern eines Differentialgetriebes anzuordnen sind. Ein derartiger Verbund von Anlaufscheiben ist aus der DE-C- 24 54 067 bekannt.

Der bekannte Anlaufscheibenverbund für Differentialgetriebe erleichtert und vereinfacht die Montage eines Kegelrad-Differentialgetriebes und erhöht auch die Lebensdauer der vorzugsweise aus Polyamid bestehenden Anlaufscheiben. Bei einem derartigen Anlaufscheibenverbund muß das Ausgleichsgehäuse sowie die Kegelräder der Abtriebsachsen sowie auch die Ausgleichskegelräder sehr präzise hergestellt werden, damit das Spiel zwischen den Kegelrädern, den Anlaufscheiben und dem Ausgleichsgehäuse nicht zu groß ist. Dieses Spiel sowie insbesondere auch das Spiel zwischen den Zahnflanken der miteinander kämmenden Kegelräder sind für Getriebegeräusche sowie auch für Verschleißerscheinungen des Differentialgetriebes verantwortlich.

Zum spielfreien oder vorgespannten axialen Einstellen von Lageranordnungen ist aus der DE-C- 36 42 463 eine Vorrichtung mit einem Paar von Einstellringen bekannt, die mit zueinander komplementären, je zwei oder mehreren konzentrischen Steigungsflächen mit einem Steigungswinkel im Bereich der Selbsthemmung aufeinanderliegen und durch Relativdrehung zueinander ihr Axialmaß verändern. An dem Paar von Einstellringen sind zwei oder mehrere radial ineinanderliegende Paare von sich über 360° erstreckenden Steigungsflächen ausgebildet und die Paare von Steigungsflächen sind bezüglich ihres Steigungsanfanges und -endes winkelmäßig zueinander versetzt angeordnet, wobei die Größe des Versatzwinkels reziprok zur Anzahl der Paare von Steigungsflächen ist.

Diese Vorrichtung ergibt bei guter Abstützung einen relativ großen axialen Verstellbereich.

Diese bekannten, aus zwei Einstellringen oder Einstellscheiben sich zusammensetzenden Vorrichtungen zum spielfreien oder vorgespannten axialen Einstellen von Lageranordnungen sind für den Einbau innerhalb des Ausgleichsgehäuses von Differentialgetrieben ungeeignet.

Der Erfindung liegt die Aufgabe zugrunde, einen Verbund von Anlaufscheiben zu schaffen, bei dem insbesondere das Spiel zwischen den Kegelrädern der Abtriebsachsen und dem Ausgleichsgehäuse verringert oder vermieden werden kann.

Diese Aufgabe wird erfindungsgemäß dadurch gelöst, daß auf den dem Ausgleichsgehäuse zugewandten Außenseiten der Anlaufscheiben sich konzentrisch über 360° erstreckende Steigungsflächen an geformt sind, die mit komplementären Steigungsflächen von Stellscheiben korrespondieren, die zum Einstellen des axialen Abstandes der Innenseiten der Anlaufscheiben und der Außenseiten der Stellscheiben um die Drehachse der Kegelräder in Umfangsrichtung einstellbar und zwischen dem Gehäuse und den Anlaufscheiben anzuordnen sind.

Mit Hilfe dieser Stellscheiben kann das Spiel zwischen den Kegelrädern der Abtriebsachsen und dem Ausgleichsgehäuse auf Null oder sogar auf Vorspannung gebracht werden. Die Stellscheiben sind vorteilhafterweise über eine Schnappverbindung mit den zugehörigen Anlaufscheiben des Anlaufscheibenverbundes verbunden, so daß die beiden einstellbaren Stellscheiben mit den vier Anlaufscheiben des Anlaufscheibenverbundes eine Montageeinheit bilden. Dabei sind zum leichten Einbau die beiden Stellscheiben auf Spiel eingestellt. Nach dem Einbau werden die Einstellscheiben auf Null oder auf Vorspannung eingestellt und in dieser Einstellung durch Kleben, Schweißen oder Verrasterung fixiert.

Weitere Merkmale der Erfindung ergeben sich aus den Patentansprüchen 2 bis 10.

In der folgenden Beschreibung werden Ausführungsbeispiele der Erfindung unter Bezugnahme auf die Zeichnungen näher erläutert. Die Zeichnungen zeigen in
- Fig. 1: eine Schnittansicht eines Anlaufscheibenverbundes mit Stellscheiben nach der Erfindung,
- Fig. 2: eine Ansicht auf die Innenseite einer Stellscheibe,
- Fig. 3: eine Ansicht auf die mit Steigungsflächen versehene Seite einer Anlaufscheibe des Anlaufscheibenverbundes,
- Fig. 4: eine Schnittansicht des Ausgleichsgehäuses eines Differentialgetriebes mit erfindungsgemäßem Anlaufscheibenverbund,
- Fig. 5: eine Detailansicht V aus Fig. 4 im vergrößerten Maßstab,
- Fig. 6: eine Schnittansicht eines Verbundes von Anlaufscheiben
- Fig. 7: eine Ansicht einer Verrasterung einer Stellscheibe mit einer Anlaufscheibe.

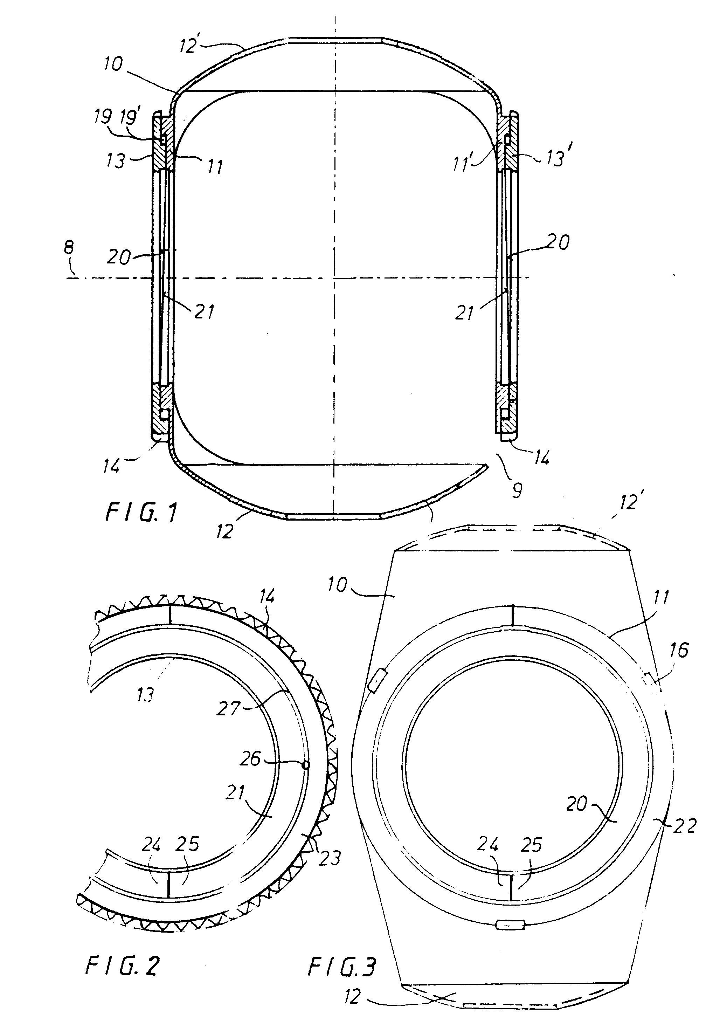

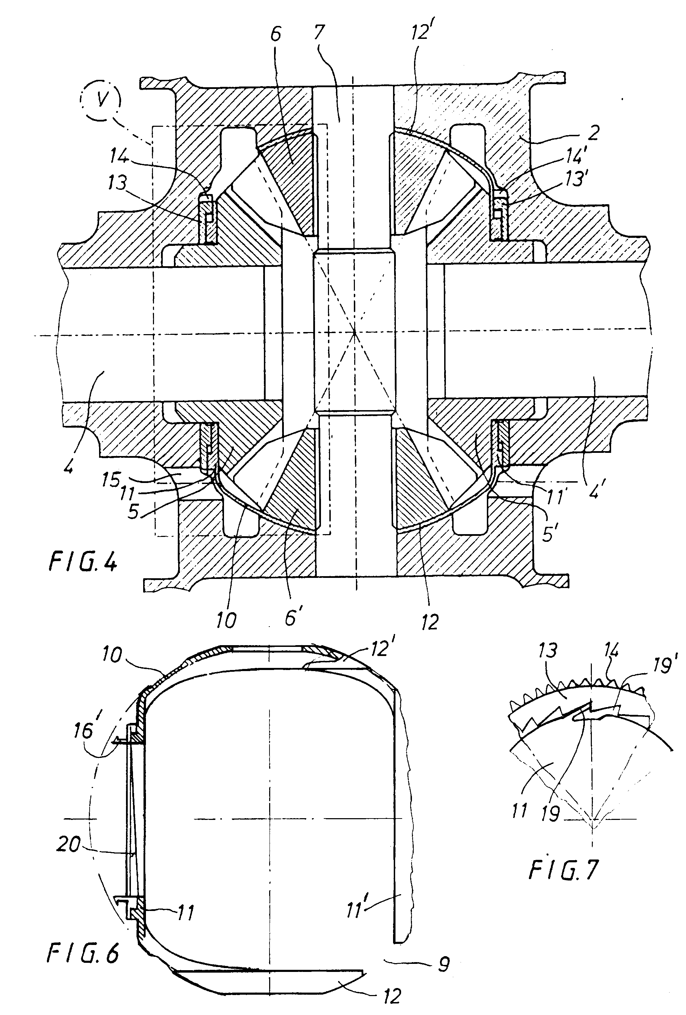

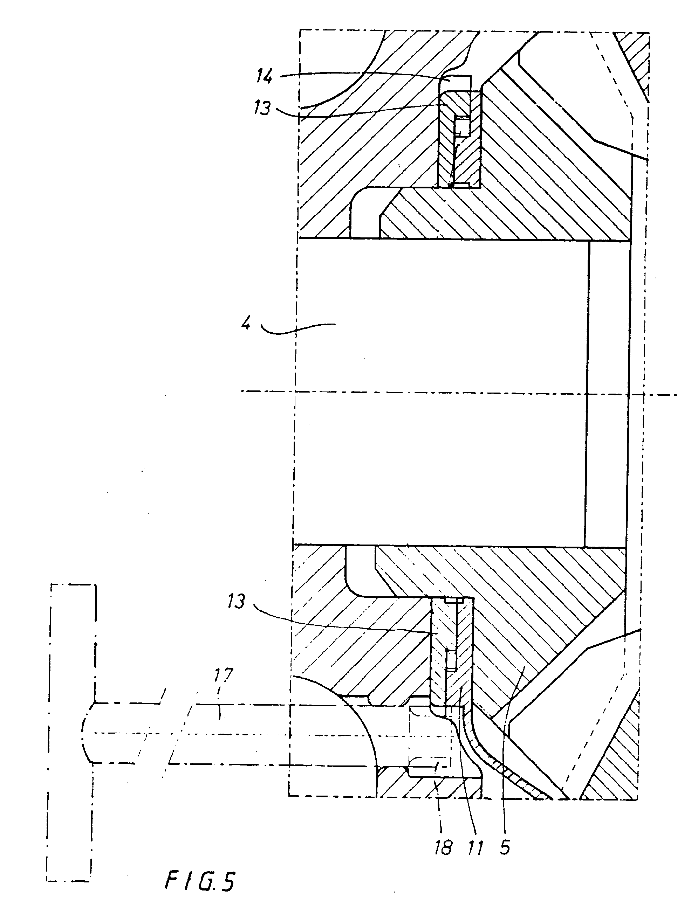

Wie die Fig. 1 zeigt, sind die Anlaufscheiben 11 und 11' der Kegelräder der Abtriebsachsen eines Differentialgetriebes mit den Anlaufscheiben 12 und 12' für die Ausgleichskegelräder miteinander zu einer Montageeinheit verbunden. Auf den dem Ausgleichsgehäuse 2 zugewandten Außenseiten der Anlaufscheiben 11 und 11' sind konzentrisch über 360° erstreckende Steigungsflächen 20 angeformt, die mit komplementären Steigungsflächen 21 von Stellscheiben 13 und 13' korrespondieren. Durch Verdrehen der Stellscheiben 13 und 13' um die Drehachse 8 der Kegelräder 5,5' beziehungsweise der Abtriebsachsen 4 und 4' (vergleiche Fig. 4) kann der axiale Abstand der Innenseiten der Anlaufscheiben 11 und 11' und der Außenseiten der Stellscheiben 13,13' eingestellt werden, um das Spiel zwischen den anlaufenden Kegelrädern 5 und 5' der Abtriebsachsen 4,4' und dem Ausgleichsgehäuse 2 auszugleichen.

Wie insbesondere die Fig. 2 und 5 zeigen, sind die Stellscheiben 13,13' an ihrem Umfang mit Zahnkränzen 14,14' versehen, so daß sie mit Hilfe eines mit einem Ritzel versehenen Schlüssels um die Achse 8 verdreht werden können.

Wie die Fig. 4 zeigt, sind auf beiden Seiten des Ausgleichsgehäuses im Bereich der Zahnkränze 14,14' je ein Schlüsselloch 15,15' zum Durchlaß und Lagerung eines mit Ritzel 18 versehenen Stellschlüssels 17 angeordnet. Durch Drehen des Schlüssels 17 kann die Stellscheibe 13,13' auf einen gewünschten Wert eingestellt und in dieser Stellung auch fixiert werden.

Wie die Fig. 3 zeigt, können an der dem Gehäuse zugewandten Seite der Anlaufscheiben 11,11' übergreifende Klauen 16 angeordnet sein, die federnd über die Stellscheiben 13,13' greifen.

Anstelle dieser übergreifenden Klauen 16 können aber auch, wie die Fig. 6 zeigt, federnde Raststifte 16' vorgesehen sein, die in entsprechende Ausnehmungen der Stellscheiben 13,13' eingreifen.

Bei der Ausführungsform nach den Fig. 1 bis 4 sind die Anlaufscheiben 11,11' und die dazugehörigen Stellscheiben 13,13' an ihren jeweiligen Anlaufflächen eben.

Die Anlaufscheiben der Ausgleichsräder 6,6' sind in bekannter Weise kugelförmig gewölbt. Es ist auch bei diesen Anlaufscheiben möglich, zum Spielausgleich Stellscheiben mit Steigungsflächen vorzusehen, die mit Steigungsflächen der Anlaufscheiben für die Ausgleichsräder 6,6' korrespondieren.

Wie die Fig. 7 zeigt, kann zwischen einer Anlaufscheibe 11 und einer Stellscheibe 13 eine Verrasterung vorgesehen sein, die sich aus einer federnden Raste 19 und sägezahnförmigen Rastausnehmungen 19' zusammensetzt. Die federnde Raste 19 läßt zwar ein Verdrehen der Stellscheibe in einer Richtung zu, sperrt aber ein Verdrehen der Stellscheibe in Gegenrichtung. Bei dieser Ausführungsform ist nach dem Einstellen der Stellscheiben 13 und 13' nichts weiteres zu unternehmen, weil eine Sperrung selbsttätig durch die federnden Rasten 19 eintritt.

Um die eingestellte Stellscheibe mit der dazugehörigen Anlaufscheibe starr zu verbinden, können in der Stellscheibe 13 Bohrungen 26 vorgesehen sein, die in einer Verteilnut 27 münden. In diese Bohrungen 26 kann ein Klebstoff hineingedrückt werden, der ein zuverlässiges Verkleben der Stellscheibe mit der dazugehörigen Anlaufscheibe gewährleistet.

Wie die Fig. 2 und 3 zeigen, weisen die aufeinanderliegenden Flächen der Anlaufscheibe 11 und der Stellscheibe 13 je zwei über 360° sich erstreckende Steigungsflächen 20,22 und 21,23 auf. Der Anfang 24 und das Ende 25 einer Steigungsfläche 20, 22, 21, 23 sind etwa um 2 bis 3 mm axial versetzt und die Steigungsfläche steigt über 360° linear um diese 2 bis 3 mm. Ferner sind die Steigungsflächen 20, 22 und 21, 23 um 180° zueinander versetzt.

### Bezugszeichenliste

- 1: Differentialgetriebe
- 2: Gehäuse
- 3: Flansch
- 4: Abtriebswelle
- 4': Abtriebswelle
- 5: Kegelrad der Abtriebswelle 4
- 5': Kegelrad der Abtriebswelle 4'
- 5: Ausgleichskegelrad
- 6': Ausgleichskegelrad
- 7: Ausgleichsachse
- 8: Drehachse
- 9: Öffnung
- 10: Verbund der Anlaufscheiben
- 11: Anlaufscheibe für Kegelrad 5
- 11': Anlaufscheibe für Kegelrad 5'
- 12: Anlaufscheibe für Ausgleichsrad 6
- 12': Anlaufscheibe für Ausgleichsrad 6'
- 13: Stellscheibe für Kegelrad 5
- 13': Stellscheibe für Kegelrad 5'
- 14: Zahnkranz
- 14': Zahnkranz
- 15: Schlüsselloch
- 15': Schlüsselloch
- 16: Schnappverbindung, übergreifende Klauen,
- 16': Schnappverbindung, einschnappende Stifte
- 17: Stellschlüssel
- 18: Ritzel
- 19: Verrasterung, federnde Raste
- 19': Verrasterung, Rastausnehmungen
- 20: Steigungsfläche der Anlaufscheibe
- 21: Steigungsfläche der Stellscheibe
- 22: Steigungsfläche der Anlaufscheibe
- 23: Steigungsfläche der Stellscheibe
- 24: Anfang
- 25: Ende
- 26: Bohrung
- 27: Nut

## Patentansprüche

1. Verbund von Anlaufscheiben (11,11') , die zwischen dem Ausgleichsgehäuse (2) und den Kegelrädern (5,5') eines Differentialgetriebes (1) anzuordnen sind,
dadurch gekennzeichnet, daß auf den dem Ausgleichsgehäuse (2) zugewandten Außenseiten der Anlaufscheiben (11,11') sich konzentrisch über 360° erstreckende Steigungsflächen (20,22) angeformt sind, die mit komplementären Steigungsflächen (21,23) von Stellscheiben (13,13') korrespondieren, die zum Einstellen des axialen Abstandes der Innenseite der Anlaufscheiben (11,11') und Außenseiten der Stellscheiben (13,13' ) um die Drehachse (8) der Kegelräder (5,5') in Umfangsrichtung einstellbar zwischen dem Ausgleichsgehäuse (2) und den Anlaufscheiben (11,11' ) anzuordnen sind.

2. Verbund von Anlaufscheiben nach Anspruch 1, dadurch gekennzeichnet, daß die Stellscheiben (13,13' ) mit zur Drehachse (8) konzentrischen Zahnkränzen (14,14') versehen sind.

3. Verbund von Anlaufscheiben nach Anspruch 2, dadurch gekennzeichnet, daß die Zahnkränze (14,14') am Umfang der Stellscheiben (13,13') angeordnet sind.

4. Verbund von Anlaufscheiben nach einem der Ansprüche 1 bis 3, dadurch gekennzeichnet, daß die Stellscheiben (13,13') mittels einer übergreifenden Schnappverbindung (16,16') mit den zugehörigen Anlaufscheiben (11,11') verbunden sind.

5. Verbund von Anlaufscheiben nach einem der Ansprüche 1 bis 4, dadurch gekennzeichnet, daß die Anlaufscheiben (11,11') der Kegelräder (5,5') und die dazugehörigen Stellscheiben (13,13') an ihren Anlaufflächen eben sind.

6. Verbund von Anlaufscheiben nach einem der Ansprüche 1 bis 5, dadurch gekennzeichnet, daß die Anlaufscheiben (12,12') der Ausgleichsräder (6,6') kugelförmig gewölbt sind.

7. Verbund von Anlaufscheiben nach einem der Ansprüche 1 bis 6, dadurch gekennzeichnet, daß die Stellscheibe (13,13') mittels mindestens einer federnden Raste (19), die in sägezahnförmige Rastausnehmungen (16') im jeweils anderen Partner eingreift, gegen Zurückdrehen gegenüber der zugehörigen Anlaufscheibe (11,11') gesichert ist.

8. Verbund von Anlaufscheiben nach einem der Ansprüche 1 bis 7, dadurch gekennzeichnet, daß in den Stellscheiben (13,13') mindestens eine zwischen die Stellscheibe (13,13') und die dazugehörige Anlaufscheibe (11,11') führende und in eine Verteilnut (27) mündende Bohrung (26) zum Eindrücken eines Klebstoffs angeordnet ist.

9. Differentialgetriebe mit einem Verbund von Anlaufscheiben (11,11', 12,12') , dadurch gekennzeichnet, daß auf beiden Seiten des Gehäuses (2) im Bereich der Zahnkränze (14,14') je ein Schlüsselloch (15,15') zum Durchlaß und zur Lagerung eines mit Ritzel (18) versehenen Stellschlüssels (17) angeordnet ist.

10. Differentialgetriebe nach Anspruch 9, dadurch gekennzeichnet, daß die eingestellten Stellscheiben (13,13') durch Klebung oder Schweißung mit den zugehörigen Anlaufscheiben (11,11') verbunden sind.

## Claims

1. An assembly of thrust bearing discs (11, 11') which are to be arranged between the differential housing (2) and the bevel wheels (5, 5') of a differential gear (1), characterised in that formed on the outsides of the thrust bearing discs (11, 11'), which outsides are towards the differential housing (2), are inclined surfaces (20, 22) which extend concentrically over 360° and which correspond to complementary inclined surfaces (21, 23) of adjusting discs (13, 13') which are to be arranged between the differential housing (2) and the thrust bearing discs (11, 11') adjustably in the peripheral direction about the axis of rotation (8) of the bevel wheels (5, 5') for adjustment of the axial spacing of the inside of the thrust bearing discs (11, 11') and the outsides of the adjusting discs (13, 13').

2. An assembly of thrust bearing discs according to claim 1 characterised in that the adjusting discs (13, 13') are provided with annular tooth configurations (14, 14') which are concentric relative to the axis of rotation (8).

3. An assembly of thrust bearing discs according to claim 2 characterised in that the annular tooth configurations (14, 14') are arranged at the periphery of the adjusting discs (13, 13').

4. An assembly of thrust bearing discs according to one of claims 1 to 3 characterised in that the adjusting discs (13, 13') are connected to the associated thrust bearing discs (11, 11') by means of a snap connection (16, 16') engaging over same.

5. An assembly of thrust bearing discs according to one of claims 1 to 4 characterised in that the thrust bearing discs (11, 11') of the bevel wheels (5, 5') and the associated adjusting discs (13, 13') are flat at their thrust bearing surfaces.

6. An assembly of thrust bearing discs according to one of claims 1 to 5 characterised in that the thrust bearing discs (12, 12') of the differential wheels (6, 6') are spherically curved.

7. An assembly of thrust bearing discs according to one of claims 1 to 6 characterised in that the adjusting disc (13, 13') is prevented from turning backwards relative to the associated thrust bearing disc (11, 11') by means of at least one resilient detent (19) which engages into sawtooth-shaped detent recesses (16') in the respective other cooperating member.

8. An assembly of thrust bearing discs according to one of claims 1 to 7 characterised in that disposed in the adjusting discs (13, 13') is at least one bore (26) which leads between the adjusting disc (13, 13') and the associated thrust bearing disc (11, 11') and opens into a distribution groove (27), for forcing in an adhesive.

9. A differential gear having an assembly of thrust bearing discs (11, 11', 12, 12') characterised in that arranged on both sides of the housing (2) in the region of the annular tooth configurations (14, 14') is a respective wrench hole (15, 15') for passing therethrough and supporting an adjusting wrench (17) provided with a pinion (18).

10. A differential gear according to claim 9 characterised in that the adjusted adjusting discs (13, 13') are connected to the associated thrust bearing discs (11, 11') by adhesive or welding.

## Revendications

1. Groupe de paliers axiaux (11,11') à disposer entre le carter de différentiel (2) et les pignons coniques (5,5') d'un différentiel (1), caractérisé en ce que sur les faces externes des paliers axiaux (11,11') qui sont orientées vers le carter de différentiel (2) sont formées des surfaces biaisées (20,22) qui s'étendent de manière concentrique sur 360° et qui correspondent à des surfaces biaisées complémentaires (21,23) de rondelles de compensation (13,13') prévues entre le carter de différentiel (2) et les paliers axiaux (11,11') et réglables dans la direction périphérique, autour de l'axe de rotation (8) des pignons coniques (5,5'), pour le réglage de l'écartement axial de la face interne des paliers axiaux (11,11') et des faces externes des rondelles de compensation (13,13').

2. Groupe de paliers axiaux selon la revendication 1, caractérisé en ce que les rondelles de compensation (13,13') sont dotées de couronnes dentées (14,14') concentriques à l'axe de rotation (8).

3. Groupe de paliers axiaux selon la revendication 2, caractérisé en ce que les couronnes dentées (14,14') sont prévues à la périphérie des rondelles de compensation (13,13').

4. Groupe de paliers axiaux selon l'une des revendications 1 à 3, caractérisé en ce que les rondelles de compensation (13,13') sont reliées aux paliers axiaux correspondants (11,11') par un dispositif d'encliquetage à recouvrement (16,16').

5. Groupe de paliers axiaux selon l'une des revendications 1 à 4, caractérisé en ce que les paliers axiaux (11,11') des pignons coniques (5,5') et les rondelles de compensation (13,13') correspondantes présentent une surface portante plane.

6. Groupe de paliers axiaux selon l'une des revendications 1 à 5, caractérisé en ce que les paliers axiaux (12,12') des pignons satellites de différentiel (6,6') sont bombés en forme de calotte sphérique.

7. Groupe de paliers axiaux selon l'une des revendications 1 à 6, caractérisé en ce que la rondelle de compensation (13,13') est empêchée de tourner en arrière par rapport au palier axial correspondant (11,11') par au moins un cliquet élastique (19), qui s'engage dans des évidements d'enclenchement en forme de dents de scie (16') ménagés dans l'autre partie.

8. Groupe de paliers axiaux selon l'une des revendications 1 à 7, caractérisé en ce qu'il est prévu dans les rondelles de compensation (13,13') au moins un alésage (26) ménagé entre la rondelle de compensation (13,13') et le palier axial correspondant (11,11') et débouchant dans une rainure de distribution (27) pour l'injection d'un adhésif.

9. Différentiel doté d'un groupe de paliers axiaux (11,11' ,12,12'), caractérisé en ce qu'un orifice de clé (15,15') est prévu des deux côtés du carter (2), au niveau des couronnes dentées (14,14'), pour laisser passer et loger une clé de réglage (17) dotée d'un pignon (18).

10. Différentiel selon la revendication 9, caractérisé en ce que les rondelles de compensation (13,13') réglées sont assemblées aux paliers axiaux correspondants (11,11') par collage ou soudage.
